# EUROPEAN PATENT SPECIFICATION

(11) **EP 3 552 675 B1**
(45) Date of publication and mention of the grant of the patent: **23.06.2021**
(21) Application number: 19167892.9
(22) Date of filing: 08.04.2019
(51) Int. Cl.: A63B 27/00, A62B 1/14, A63B 29/02

(54) **ROPED ACCESS SYSTEM**
SEILZUGANGSSYSTEM
SYSTÈME D'ACCÈS À CORDES

(30) Priority: 13.04.2018 GB 201806126
(43) Date of publication of application: 16.10.2019
(73) Proprietor: Treemagineers Ltd, Pitlochry PH17 2QH (GB)
(72) Inventor: Cowell, Christopher Sidney, Pitlochry, PH18 5TP (GB); Tanner, Elliot James, Montgomery, SY15 6DZ (GB)
(74) Representative: Hamilton, Alistair

(56) References cited:
- WO-A1-2013/070269
- CN-U- 206 088 873
- DE-A1- 10 220 758
- US-A- 6 085 866
- M Bridge: "Hitch Climbers' Guide to the Canopy Guidance for the use of the certified Hitch Climber System", , 2009, XP55608211, Retrieved from the Internet: URL:http://www.treemagineers.com/pdf/hitch _climbers_guide.pdf [retrieved on 2019-07-23]

## Description

This invention relates to a roped access system, such as might, for example, be used by arborists or others working at height for obtaining access by climbing a rope. In particular, it relates to a pulley assembly that is a component of such a roped access system.

Throughout this specification, terms such as "upper" and "lower" and related terms that refer to height are to be taken to refer to the item described when it is in normal use in a roped access system with a vertical or near-vertical climbing rope.

In general, a roped access system allows a person to ascend a climbing rope, spend time suspended from the climbing rope, for example to complete a task, and then descend the rope in a controlled manner. A roped access system may be configured to use stationary-rope technique (SRT), in which the climbing rope is a single fixed line, or moving-rope technique (MRT) in which the climbing line passes over a pulley, ring, branch or other support at its highest point, which can be used to provide a climbing person with a mechanical advantage over their own weight

In both techniques, it is common for a climber to be attached to the climbing rope using a tether. The tether extends from a harness worn by the climber to the climbing rope and is attached to the climbing rope using a friction hitch such as a Prusik knot A characteristic of a friction hitch is that when the tether is unloaded, it can slide upon the climbing rope, but when the tether is loaded, it locks onto the climbing rope. Thus, it is possible for a climber to be suspended from the tether with the friction hitch locked at a fixed position on the climbing rope or to ascend or descend the climbing rope by unloading the tether.

Various devices have been produced to help performance of roped access using these techniques. These typically serve to facilitate connection between a user's harness and the tether, and to act as a "Prusik minder" that ensures the friction hitch travels along the climbing rope closely following the user.

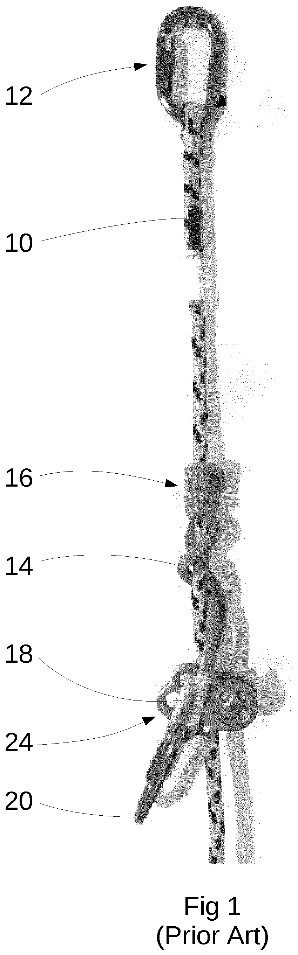

Figure 1 shows a prior art arrangement for carrying out roped access using SRT. A climbing rope 10 is connected at its upper end to a fixed anchorage 12 and hangs vertically down from the anchorage 12. A tether 14 is constituted by a rope that has a loop 18 formed at each of its ends. The tether 14 is secured to the climbing rope 10 by a friction hitch such as a Prusik knot 16. A carabiner 20 is passed through each of the loops 18 and can be used to connect the tether to an anchorage point of a user's harness. In this configuration, if a user loads the tether by lowering their weight onto the harness, the Prusik knot 16 will tighten and lock the tether 14 to the climbing rope 10, while if weight is borne elsewhere, such as by the user locking the climbing rope 10 with their feet, the Prusik knot will loosen so that it can slide up and down the climbing rope 10. These are the components of a traditional SRT arrangement.

The known modification is to include a rigging pulley 24 that comprises two plates between which a sheave is carried for rotation. Several (in this case three) holes are formed through each plate. There is an axis that extends through the rigging pulley 24 such that the holes lie to one side and the sheave to an opposite side of the axis. In the assembled apparatus, the climbing rope 10 passes between the two plates, generally along the axis, in contact with the sheave. The carabiner 20 passes through the lowermost of the holes in the plates.

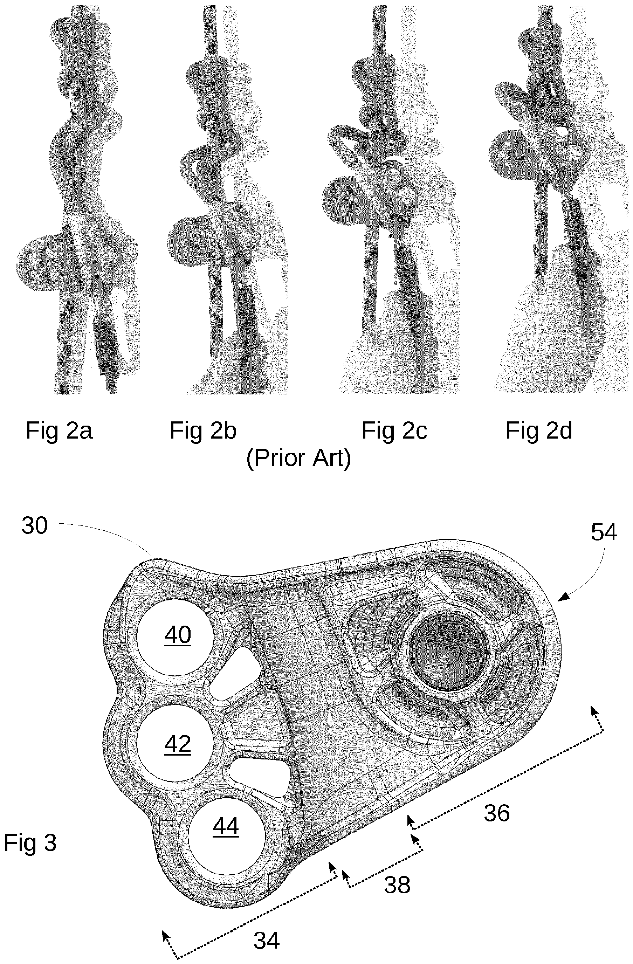

Figures 2a to 2d show an operating sequence for ascending using the arrangement described above. This progresses as follows:
1. The prusik knot 16 is above pulley 24; it locks when the tether 14 is loaded downwards;
2. The climbing rope 10 pulls through the pulley 24 as the user ascends the climbing rope 10;
3. A top face of pulley 24 contacts the Prusik knot 16 which causes the knot to release; and
4. As the pulley 24 rises, it pushes the Prusik knot 16 upwards.

The above describes a system configured for SRT but the same principles are used for MRT. Advancement up the climbing rope can be made either by the user pulling the rope through the device by taking weight off the system or thrusting upwards, for example, from a foot ascender. M Bridge: "Hitch Climbers' Guide to the Canopy Guidance for the use of the certified Hitch Climber System", 2009, XP55608211 describes such an arrangement WO 2013/070269 shows a rope brake being used in an SRT application with a conventional pulley.

The above description is intended only to set the context in which the present invention may be used. Those skilled in the field will realise that there are many possible additions and variations that me be available or are required depending on the specific circumstances in which the access system will be used.

An aim of this invention is to provide an improved pulley for use in a roped access system.

From a first aspect, this invention provides a pulley assembly as set forth in claim 1.

This arrangement inhibits the tendency of a knot formed on a rope that passes through the rope passage from entering the top of the rope passage, without limiting the size of the lower part of the rope passage.

The plates being of greater thickness adjacent to an upper opening of the rope passage can maximise the area of the plates that makes contact with a knot formed on a rope that passes through the rope passage.

The rope passage having a lower part that is enlarged with respect to other parts of the rope passage and being flared allows a rope that passes through the rope passage to move through the pulley assembly with minimal contact against the plates, and therefore a minimum of friction.

An end portion (or both end portions) of the rope passage may be curved to provide a convex surface facing the sheave. This provides a curved entry to the rope passage over which a rope can slide smoothly.

Each plate may have a plurality of apertures formed through each plate in a direction parallel to the sheave axis, one of which is a top aperture, each of the apertures in respective plates being coaxial with an aperture in the other of the plates when the plates are in the closed condition. Such embodiments typically have three apertures in each plate: a top, a middle and a bottom aperture. Advantageously, the centre of the upper aperture may be further from the sheave axis than the centre of each other aperture.

From a second aspect, this invention provides roped access system comprising a climbing rope, a portion of which passes through the rope passage of a pulley assembly embodying the first aspect of the invention, and a tether that is connected to the climbing rope above the pulley assembly by a friction hitch and to an aperture of the pulley assembly, the friction hitch being configured to grip the climbing rope upon application of a downward force to the tether and to release its grip on the climbing rope upon upward force applied to the friction hitch by plates of the pulley assembly.

In such a roped access system a part of the climbing rope above the pulley assembly is fixed. This constitutes a system configured for SRT.

Alternatively, the climbing rope extends past the friction hitch upwardly from the pulley assembly to pass slidingly over a high point or several high points (typically through a pulley, but alternatively through a ring, over a branch or other anchor) and then to extend downwardly to be fixedly connected to the pulley assembly. This constitutes a system configured for MRT.

The tether is typically connected through a second connector to an aperture of the pulley assembly. Where the plates of the pulley assembly include a plurality of apertures, the climbing rope is typically fixedly connected to an upper aperture (e.g., the top aperture) through a first connector (e.g., a carabiner). In such embodiments, the tether is typically connected through a second connector (e.g., a carabiner) to an aperture below that to which the first connector is attached. In typical embodiments, the second connector is suitable for connection to a component of a harness to transfer the weight of a user of the harness to the tether.

Embodiments of the invention will now be described in detail, by way of example, and with reference to the accompanying drawings, in which:
Figures 1 and 2a to 2d show a known roped access system;
Figures 3 and 4 are views from opposite sides of a pulley assembly being an embodiment of the invention, the pulley assembly being shown in substantially the orientation that it adopts when in use;

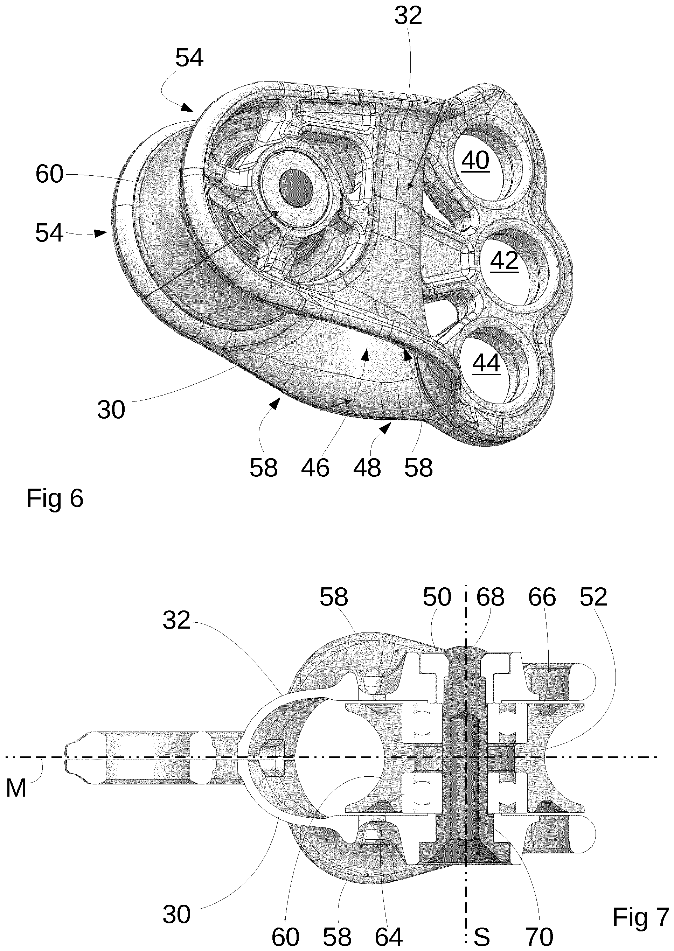

Figures 5 and 6 are oblique views of the embodiment of Figures 3 and 4;
Figures 7, 8 and 9 are sectional views of the embodiment of Figures 3 and 4;
Figure 10 shows an embodiment of the invention in use in a roped access system for MLT;
Figure 11 shows a variation of the embodiment of Figure 10;
Figure 12 shows an embodiment of the invention in use in a roped access system for SLT; and

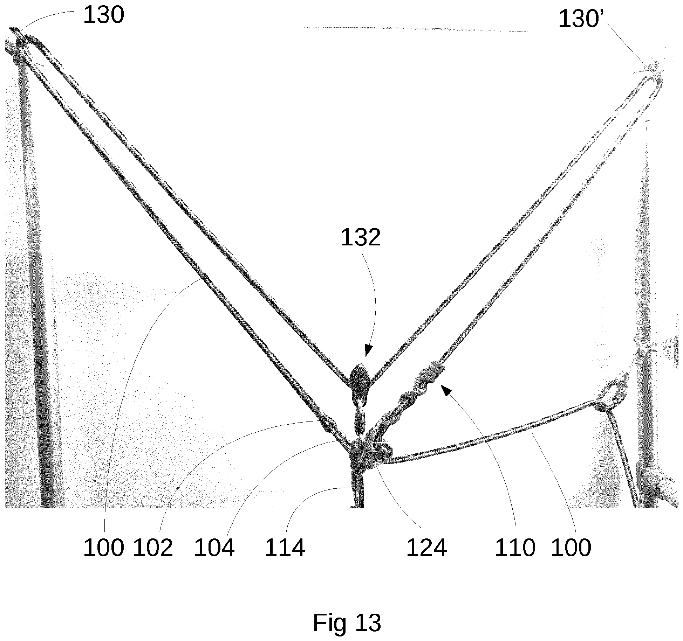

Figure 13 shows an embodiment of the invention in use in a roped access system using multiple anchors.

An embodiment of the present invention provides a rigging pulley assembly that comprises first and second plates 30, 32, typically of cast or forged metal alloy. The plates 30, 32 are not identical, but are mirror images of one another. The plates 30, 32 are arranged such that the assembly is symmetrical about a median plane M.

Each plate 30, 32 has a connection region 34, a sheave region 36 between which is an intermediate region 38. The plates 30, 32 are in contact with one another at their connection regions 34, contact being made on the median plane M. Three circular connection apertures 40, 42, 44 are formed through the plates 30, 32 within the connection region 34, these being referred to as the top, middle and bottom apertures respectively. The symmetry of the plates 30, 32 means that the apertures in each plate align with a corresponding aperture in the other plate.

The plates 30, 32 are curved such that they spread apart from one another in the intermediate region 38 such that they are spaced-apart and have inward, mutually-facing surfaces that are approximately parallel to one another at the sheave region 36. Remote from the intermediate region 38, the plates in the sheave region 36 have an approximately semi-circular periphery at 54. An axle bore extends through each plate 30, 32 in the sheave region 36, the axle bores being centred on a sheave axis S that is coincident with the centres of the semi-circular peripheries. Each axle bore is counterbored with lengths remote from one another being of greater diameter than the lengths that are proximal to one another.

A sheave 60 is disposed between the mutually-facing parallel surfaces of the plates 30, 32 in the sheave region 36. The sheave 60 is carried on the outer races of rolling-element bearings 64, 66, the inner races of which are supported on an axle 68 that passes through the axle bores, whereby the sheave 60 can rotate freely about the sheave axis S. A void 70 is formed within the axle 68 to reduce its mass. Also carried on the axle 68 is a spacer 52 between the bearings that makes contact with the inner races. The axle 68 is riveted to a nut 50 to clamp the plates 30, 32, inner races and spacer 52 together. This arrangement allows the plates to pivot with respect to one another about the sheave axis S.

The space between the intermediate region 38 forms a rope passage 46 between the plates 30, 32 adjacent to the sheave 60 (which will be described below). The curve of the plates 30, 32 as they spread within the intermediate region 38 forms a smoothly curved wall of the rope passage 46 facing the sheave 60.

In contrast to conventional rigging pulleys, the plates of the present embodiment are asymmetrical, reflecting the fact that different parts of the plate perform different functions when in use. Thus, the present embodiment has a top and a bottom and is intended for use on a rope in a specific orientation. Specifically, the upper edges of the plates serve to make contact with and to push the Prusik knot while the lower edges of the plates serve to guide the climbing rope as it passes into or out of the pulley assembly. This will now be described in more detail.

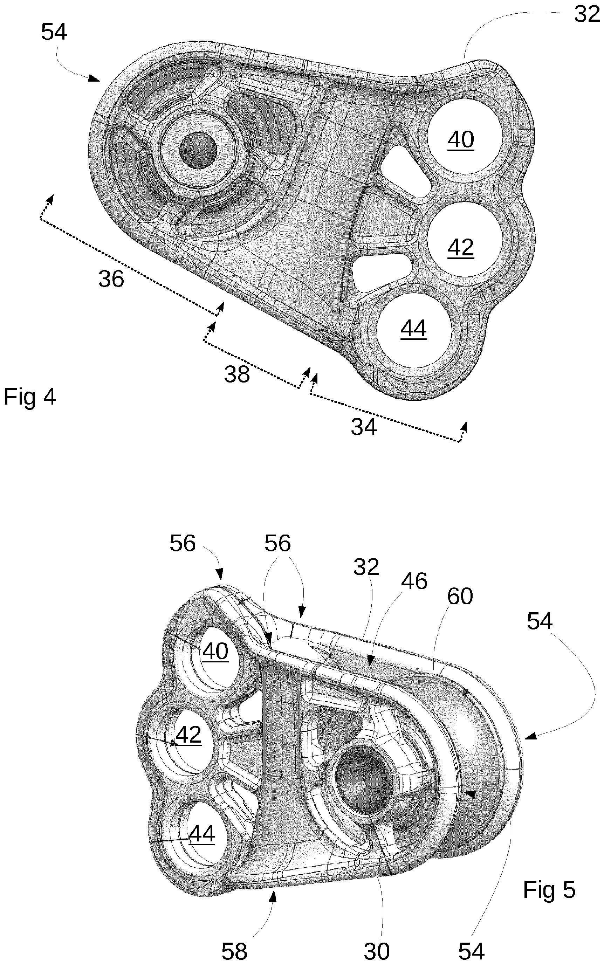

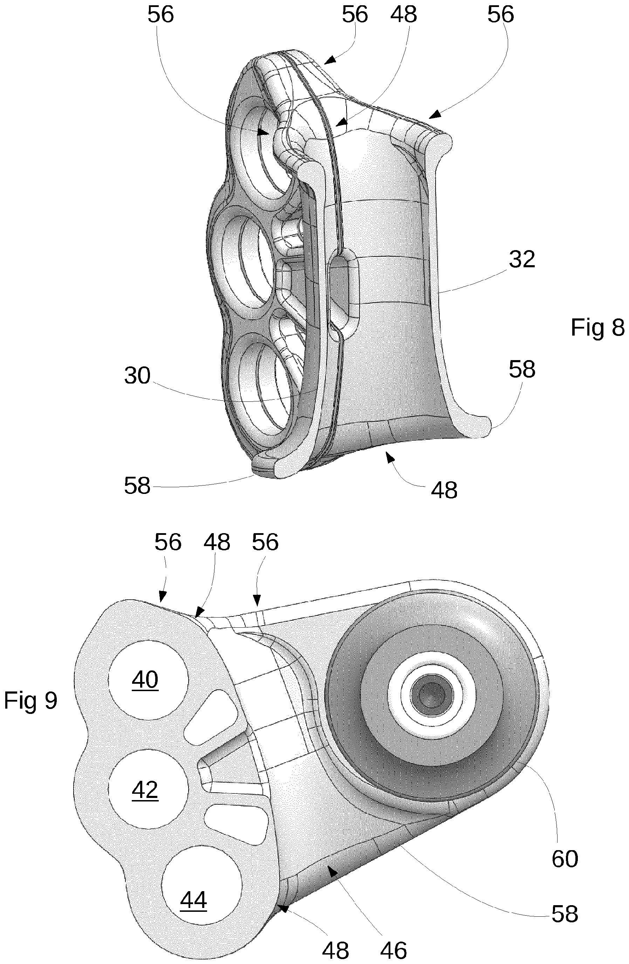

Upper edges of the plates 30, 32 make contact with the Prusik knot in regions indicated at 56 in Figures 5 and 8 (which may be thought of as the upper end of the rope passage 46). When the plates are pushing the Prusik knot along the climbing rope, it is preferable that the knot remains outside of the periphery of the plates 30, 32 and does not get drawn into the space between them. With this aim in mind, the thickness of the plates 30, 32 in this region is greater than elsewhere, the aim being to provide as large a surface area as is practical to contact the Prusik knot, without unduly increasing the weight of the pulley assembly. In the intermediate region 38, the spacing between the plates 32, 32 is as narrow as possible, taking into account the thickness of the climbing rope with which the pulley assembly is intended to be used. Typically, the spacing is wide enough to allow the climbing rope to feed into the pulley assembly without causing friction on the side plates. This will be just a little greater than the maximum diameter of the specified rope. The plates 30, 32 are shaped to have convex curved surfaces adjacent to the upper end of the rope passage 46 to ensure that a rope does not encounter any sharp edges as it moves through the assembly.

In contrast, the lower edges of the plates 30, 32 are flared in the intermediate region 38 as indicated at 58 (which may be thought of as the lower end of the rope passage 46). The flairs 58 serve to reduce the friction when a rope is pulled through the pulley assembly from underneath, such as to raise the device on the rope and push a Prusik knot. The flares 58 ensure that a rope running on the sheave 60 does not come into contact with the plates 30, 32 to help minimise friction between the rope and the pulley assembly. Also, if rope is fed 'unfair' into the pulley assembly, the flairs 58 help to guide the rope on to the sheave 60 to minimise friction, and so maintain proper function of the friction hitch.

It will also be seen from the figures that at the upper and lower ends of the rope passage, the material of the plates 30, 32 curves away from the sheave 60 as indicated at 48. This provides a curved entry to the rope passage 46 over which a rope can slide smoothly.

The top, middle and bottom apertures 40, 42, 44 are located asymmetrically with respect to the sheave axis S. The distance of the centre of the top aperture 40 from the sheave axis S is greater than the distance of the centres of the middle and bottom apertures 40, 44 from the sheave axis S. This allows the upper part of the rope passage 46 to be larger than would be the case for a symmetrical arrangement without enlarging the overall size of the assembly.

As can be seen from Figure 9, when the pulley assembly is loaded such that the top and middle apertures 40, 42 are vertically aligned, the sheave axis S is above a horizontal medial line of the plates.

A roped access system for MRT is assembled using an embodiment of the invention as described below.

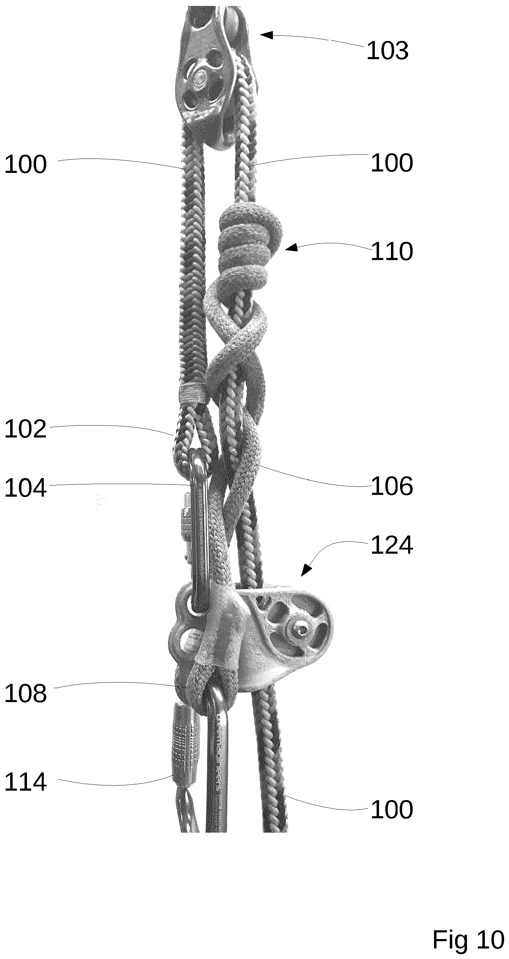

With reference to Figure 10, A climbing rope 100 or other suitable line, having a loop 102 formed at one of its ends, is passed through a pulley 103 installed at a height above which access is required, such that two lengths of the climbing rope 100 extend downwards. (The pulley is optional: the rope may be carried on a tree branch, or may be carried by rings.) An upper connector 104 (typically a carabiner) constitutes a first connector. The upper connector 104 is passed through the loop 102 and the top aperture 40 of a pulley assembly 124 embodying the invention. The end of the rope remote from the loop 102 is passed downwardly through the rope passage 46 (between the intermediate regions 38 of the plates 30, 32) of the pulley assembly 124. The plates 30, 32 may be pivoted to assist installation of the climbing rope 100.

A tether 106 has a respective loop 108, 108' formed at each of its ends. The tether 106 is attached to the climbing rope 100 using a Prusik knot 110 (or other friction hitch) at a section of the climbing rope 100 above where it enters between the plates 30, 32. A lower connector 114 (typically a carabiner) constitutes a second connector. The lower connector 114 is passed through each loop 106, 108 of the tether and the bottom aperture 44 of a pulley assembly 124, such that the plates 30, 32 pass between the loops 108.

The lower connector 114 can be secured to a load-bearing member of a user's harness to enable use of the access system in the manner described above.

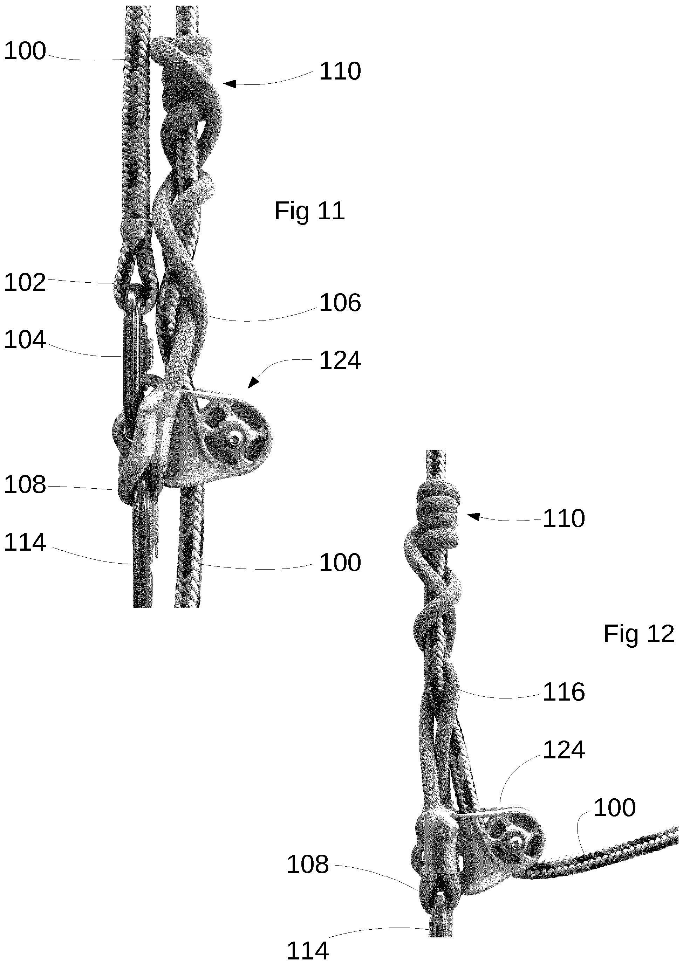

Alternatively, the upper connector 104 may be connected to the middle aperture 42, as shown in Figure 11. If this is done, other items of equipment may be connected to the top aperture 40. For example, a work positioning system can be connected to the top aperture 40.

Figure 12 shows an embodiment of the invention configured for use in SRT, with corresponding components being labelled with the same numbers as in Figures 10 and 11.

Provision of three apertures 40, 42, 44 in the plates and the wide range of angles at which ropes can enter the rope passage 46. In this embodiment, the climbing rope 100 passes over two anchor loops 130,130' (which could alternatively be pulleys). An intermediate pulley 132 is disposed on the climbing rope between the two anchor loops 130, 130'.

In this embodiment, the upper connector 104 is connected to the middle aperture 42, the intermediate pulley is connected to the top aperture 40 by a connector, and the lower connector 114 is connected to the bottom aperture 44 of the pulley assembly 124. This is just one example of a more complex arrangement that can be achieved using embodiments of the invention.

## Claims

1. A pulley assembly comprising first and second spaced plates (30, 32) and a sheave (60) carried for rotation about an axis normal to the plates, there being at least one aperture (40, 42, 44) formed through each plate in a direction parallel to the sheave axis (S), the plates having a closed condition in which the apertures of the plates are coaxial with one another and the plates are in contact in the vicinity of the apertures to form a rope passage (46) that extends between the plates adjacent to the sheave, which rope passage (46) has an upper end at upper edges of the plates (30, 32) and a lower end at lower edges of the plates (30, 32) **characterised in that** the plates are asymmetrical whereby the rope passage has an upper part that extends to the upper end, and at the region of the upper end, the thickness of the plates (30, 32) is greater than elsewhere, whereby the rope passage is of lesser size than parts of the rope passage below that upper part, and at the lower end, the plates are flared to provide a lower part that is enlarged with respect to other parts of the rope passage.

2. A pulley assembly according to claim 1 in which an end portion of the rope passage is curved to provide a convex surface facing the sheave (60).

3. A pulley assembly according to any preceding claim in which each plate has a plurality of apertures (40, 42, 44), one of which is a top aperture (40), formed through each plate in a direction parallel to the sheave axis (S), each of the apertures in respective plates being coaxial with an aperture in the other of the plates when the plates are in the closed condition.

4. A pulley assembly according to claim 3 having three apertures in each plate: a top aperture (40), a middle aperture (42) and a bottom aperture (44).

5. A pulley assembly according to claim 3 or claim 4 in which the centre of the upper aperture (40) is further from the sheave axis than the centre of each other aperture.

6. A roped access system comprising a climbing rope (100), a portion of which passes through the rope passage (46) of a pulley assembly (124) according to any preceding claim, and a tether (106) that is connected to the climbing rope above the pulley assembly by a friction hitch (110) and to an aperture of the pulley assembly, the friction hitch being configured to grip the climbing rope upon application of a downward force to the tether and to release its grip on the climbing rope upon upward force applied to the friction hitch by plates of the pulley assembly.

7. A roped access system according to claim 6 in which a part of the climbing rope (100) above the pulley assembly (124) is fixed.

8. A roped access system according to claim 6 in which the climbing rope (100) extends past the friction hitch (110) upwardly from the pulley assembly (124) to pass slidingly over one or more high point and then to extend downwardly to be fixedly connected to the pulley assembly.

9. A roped access system according to any one of claims 6 to 8 wherein the pulley assembly (124) is in accordance with claim 3 or a claim dependent therefrom, in which the climbing rope (100) is fixedly connected to an upper aperture (40) through a first connector (104).

10. A roped access system according to any one of claims 6 to 9 in which the tether (106) is connected through a second connector (114) to an aperture (44) of the pulley assembly (124).

11. A roped access system according to claim 10 wherein the pulley assembly (124) is in accordance with claim 3 or a claim dependent therefrom in which the tether (106) is connected to an aperture (42, 44) of the pulley assembly other than the top aperture.

12. A roped access system according to claim 10 or claim 11 in which the second connector (114) is suitable for connection to a component of a harness to transfer the weight of a user of the harness to the tether.

## Patentansprüche

1. Riemenscheibenanordnung, umfassend erste und zweite beabstandete Platten (30, 32) und eine Seilscheibe (60), die zur Drehung um eine Achse senkrecht zu den Platten getragen wird, wobei mindestens eine Öffnung (40, 42, 44) durch jede Platte in einer Richtung parallel zur Scheibenachse (S) ausgebildet ist, wobei die Platten einen geschlossenen Zustand aufweisen, in dem die Öffnungen der Platten koaxial zueinander sind und die Platten in der Nähe der Öffnungen in Kontakt sind, um einen Seilkanal (46) zu bilden, der sich zwischen den Platten neben der Seilscheibe erstreckt, wobei der Seilkanal (46) ein oberes Ende an Oberkanten der Platten (30, 32) und ein unteres Ende an Unterkanten der Platten (30, 32) aufweist, **dadurch gekennzeichnet, dass** die Platten asymmetrisch sind, wobei der Seilkanal einen oberen Teil aufweist, der sich zum oberen Ende erstreckt, und im Bereich des oberen Endes die Dicke der Platten (30, 32) größer ist als anderswo, wobei der Seilkanal von geringerer Größe als Teile des Seilkanals unterhalb dieses oberen Teils ist und am unteren Ende die Platten aufgeweitet sind, um einen unteren Teil bereitzustellen, der gegenüber anderen Teilen des Seilkanals vergrößert ist.

2. Riemenscheibenanordnung nach Anspruch 1, bei der ein Endabschnitt des Seilkanals gekrümmt ist, um eine konvexe Oberfläche bereitzustellen, die der Seilscheibe (60) zugewandt ist.

3. Riemenscheibenanordnung nach einem der vorhergehenden Ansprüche, bei der jede Platte mehrere Öffnungen (40, 42, 44) aufweist, von denen eine eine obere Öffnung (40) ist, die durch jede Platte in einer Richtung parallel zur Seilscheibenachse (S) ausgebildet ist, wobei jede der Öffnungen in jeweiligen Platten koaxial zu einer Öffnung in der anderen der Platten ist, wenn sich die Platten im geschlossenen Zustand befinden.

4. Riemenscheibenanordnung nach Anspruch 3 mit drei Öffnungen in jeder Platte: einer oberen Öffnung (40), einer mittleren Öffnung (42) und einer unteren Öffnung (44).

5. Riemenscheibenanordnung nach Anspruch 3 oder Anspruch 4, bei der die Mitte der oberen Öffnung (40) weiter von der Seilscheibenachse entfernt ist als die Mitte jeder anderen Öffnung.

6. Seilzugangssystem, umfassend ein Kletterseil (100), von dem ein Abschnitt durch den Seilkanal (46) einer Riemenscheibenanordnung (124) nach einem der vorhergehenden Ansprüche läuft, und einen Halteseil (106), das mit dem Kletterseil über der Riemenscheibenanordnung durch einen Klemmknoten (110) und mit einer Öffnung der Riemenscheibenanordnung verbunden ist, wobei der Klemmknoten konfiguriert ist, um das Kletterseil beim Aufbringen einer nach unten gerichteten Kraft auf das Halteseil zu greifen und seinen Griff am Kletterseil bei einer nach oben gerichteten Kraft zu lösen, die durch Platten der Riemenscheibenanordnung auf den Klemmknoten aufgebracht wird.

7. Seilzugangssystem nach Anspruch 6, bei dem ein Abschnitt des Kletterseils (100) über der Riemenscheibenanordnung (124) befestigt ist.

8. Seilzugangssystem nach Anspruch 6, bei dem sich das Kletterseil (100) von der Riemenscheibenanordnung (124) am Klemmknoten (110) vorbei nach oben erstreckt, um über einen oder mehrere hohe Punkte gleitend zu verlaufen und sich dann nach unten zu erstrecken, um mit der Riemenscheibenanordnung fest verbunden zu sein.

9. Seilzugangssystem nach einem der Ansprüche 6 bis 8, wobei die Riemenscheibenanordnung (124) dem Anspruch 3 oder einem davon abhängigen Anspruch entspricht, bei dem das Kletterseil (100) fest mit einer oberen Öffnung (40) durch einen ersten Verbinder (104) verbunden ist.

10. Seilzugangssystem nach einem der Ansprüche 6 bis 9, bei dem das Halteseil (106) über einen zweiten Verbinder (114) mit einer Öffnung (44) der Riemenscheibenanordnung (124) verbunden ist.

11. Seilzugangssystem nach Anspruch 10, wobei die Riemenscheibenanordnung (124) dem Anspruch 3
oder einem davon abhängigen Anspruch entspricht, bei dem das Halteseil (106) mit einer anderen Öffnung (42, 44) der Riemenscheibenanordnung als die obere Öffnung verbunden ist.

12. Seilzugangssystem nach Anspruch 10 oder Anspruch 11, bei dem der zweite Verbinder (114) zum Verbinden mit einer Komponente eines Klettergurts geeignet ist, um das Gewicht eines Benutzers des Klettergurts auf das Halteseil zu übertragen.

## Revendications

1. Ensemble de poulie comprenant des première et seconde plaques espacées (30, 32) et un réa (60) porté pour rotation autour d'un axe normal aux plaques, au moins une ouverture (40, 42, 44) étant formée à travers chaque plaque dans un direction parallèle à l'axe de réa (S), les plaques ayant un état fermé dans lequel les ouvertures des plaques sont coaxiales les unes aux autres et les plaques sont en contact au voisinage des ouvertures pour former un passage de corde (46) qui s'étend entre les plaques adjacentes au réa, lequel passage de corde (46) a une extrémité supérieure au niveau des bords supérieurs des plaques (30, 32) et une extrémité inférieure au niveau des bords inférieurs des plaques (30, 32) **caractérisé en ce que** les plaques sont asymétriques moyennant quoi le passage de corde a une partie supérieure qui s'étend jusqu'à l'extrémité supérieure, et au niveau de la région de l'extrémité supérieure, l'épaisseur des plaques (30, 32) est plus grande qu'ailleurs, moyennant quoi le passage de corde est de moindre dimension que des parties du passage de corde en dessous de cette partie supérieure, et au niveau de l'extrémité inférieure, les plaques sont évasées pour présenter une partie inférieure qui est élargie par rapport à d'autres parties du passage de corde.

2. Ensemble de poulie selon la revendication 1, dans lequel une partie d'extrémité du passage de corde est incurvée pour présenter une surface convexe faisant face au réa (60).

3. Ensemble de poulie selon l'une quelconque des revendications précédentes, dans lequel chaque plaque a une pluralité d'ouvertures (40, 42, 44), dont l'une est une ouverture supérieure (40), formées à travers chaque plaque dans une direction parallèle à l'axe de réa (S), chacune des ouvertures dans les plaques respectives étant coaxiale avec une ouverture dans l'autre des plaques lorsque les plaques sont dans l'état fermé.

4. Ensemble de poulie selon la revendication 3, ayant trois ouvertures dans chaque plaque :
une ouverture supérieure (40), une ouverture médiane (42) et une ouverture inférieure (44).

5. Ensemble de poulie selon la revendication 3 ou la revendication 4, dans lequel le centre de l'ouverture supérieure (40) est plus éloigné de l'axe de réa que le centre de chaque autre ouverture.

6. Système d'accès cordé comprenant une corde d'escalade (100), dont une partie passe à travers le passage de corde (46) d'un ensemble de poulie (124) selon l'une quelconque des revendications précédentes, et une longe (106) qui est connectée à la corde d'escalade au-dessus de l'ensemble de poulie par un nœud de friction (110) et à une ouverture de l'ensemble de poulie, le nœud de friction étant configuré pour serrer la corde d'escalade lors de l'application d'une force descendante sur la longe et pour relâcher sa prise sur la corde d'escalade lors de l'application d'une force ascendante sur le nœud de friction par les plaques de l'ensemble de poulie.

7. Système d'accès cordé selon la revendication 6, dans lequel une partie de la corde d'escalade (100) au-dessus de l'ensemble de poulie (124) est fixe.

8. Système d'accès cordé selon la revendication 6, dans lequel la corde d'escalade (100) s'étend au-delà du nœud de friction (110) vers le haut à partir de l'ensemble de poulie (124) pour passer par glissement sur un ou plusieurs points hauts et ensuite s'étendre vers le bas pour être connectée de manière fixe à l'ensemble de poulie.

9. Système d'accès cordé selon l'une quelconque des revendications 6 à 8, dans lequel l'ensemble de poulie (124) est selon la revendication 3 ou à une revendication qui en dépend, dans lequel la corde d'escalade (100) est connectée de manière fixe à une ouverture supérieure (40) par le biais d'un premier connecteur (104).

10. Système d'accès cordé selon l'une quelconque des revendications 6 à 9, dans lequel la longe (106) est connectée par le biais d'un second connecteur (114) à une ouverture (44) de l'ensemble de poulie (124).

11. Système d'accès cordé selon la revendication 10, dans lequel l'ensemble de poulie (124) est selon la revendication 3 ou une revendication qui en dépend, dans lequel la longe (106) est connectée à une ouverture (42, 44) de l'ensemble de poulie autre que l'ouverture supérieure.

12. Système d'accès cordé selon la revendication 10 ou la revendication 11, dans lequel le second connecteur (114) est adapté pour une connexion à un composant d'un harnais pour transférer le poids d'un utilisateur du harnais à la longe.
